# EUROPÄISCHE PATENTANMELDUNG

(11) **EP 3 650 411 A1**
(43) Veröffentlichungstag der Anmeldung: **13.05.2020**
(21) Anmeldenummer: 18205746.3
(22) Anmeldetag: 12.11.2018
(51) Int. Cl.: C02F 1/20, C02F 1/44, C08B 1/10, B01D 61/24, B01D 65/02, C02F 103/28

(54) **VORRICHTUNG UND VERFAHREN ZUR RÜCKGEWINNUNG VON ALKALISCHER LÖSUNG, SOWIE VORRICHTUNG UND VERFAHREN ZUR HERSTELLUNG REGENERIERTER CELLULOSISCHER FORMKÖRPER AUFWEISEND EIN SOLCHES VERFAHREN**

(71) Anmelder: LENZING AKTIENGESELLSCHAFT, 4860 Lenzing (AT)
(72) Erfinder: Herchl, Richard, 4910 Ried im Innkreis (AT); Malzner, Erwin, 4845 Rutzenmoos (AT); Silmbrod, Stefanie, 4861 Aurach am Hongar (AT); Wiesinger, Markus, 4844 Regau (AT)

(57) **Zusammenfassung**

Es wird ein Verfahren (200, 201, 202) zur Rückgewinnung von alkalischer Lösung (1) aus mit Hemicellulosen (22) verunreinigter wässriger alkalischer Lösung (2), sowie eine Vorrichtung (100, 101) zur Durchführung des Verfahrens (200, 201, 202) gezeigt, bei dem die wässrige alkalische Lösung (2) als Feedstrom (14) und Prozesswasser (10) als Gegenstrom (15) über eine lonentauscher-Diffusionsdialyse (3, 31) mit zumindest einer Dialysemembran (4, 41, 42, 43, 44, 45) zwischen Feedstrom (14) und Gegenstrom (15) geführt werden und dabei in ein alkalisch angereichertes Diffusat (13) als rückgewonnene alkalische Lösung (1) und ein mit Hemicellulosen (22) angereichertes Dialysat (9) umgesetzt werden. Um den Wartungsaufwand des Verfahrens der eingangs erwähnten Art zu reduzieren und dessen Standzeit zu erhöhen, wird vorgeschlagen, dass vor dem Zuführen zur lonentauscher-Diffusionsdialyse (3, 31) Gaskomponenten (28) aus dem Prozesswasser (10) des Gegenstroms (15) entfernt werden.

## Beschreibung

### Technisches Gebiet

Die Erfindung betrifft ein Verfahren zur Rückgewinnung von alkalischer Lösung aus mit Hemicellulosen verunreinigter wässriger alkalischer Lösung, bei dem die wässrige alkalische Lösung als Feedstrom und Prozesswasser als Gegenstrom über eine lonentauscher-Diffusionsdialyse mit zumindest einer Dialysemembran zwischen Feedstrom und Gegenstrom geführt werden und dabei in ein alkalisch angereichertes Diffusat als rückgewonnene alkalische Lösung und ein mit Hemicellulosen angereichertes Dialysat umgesetzt werden.

Zudem betrifft die Erfindung eine Vorrichtung zur Rückgewinnung von alkalischer Lösung aus mit Hemicellulosen verunreinigter wässriger alkalischer Lösung, aufweisend eine lonentauscher-Diffusionsdialyse mit zumindest einer Dialysemembran und mit zumindest je einem Feedstrom-Flächenkanal, zur Zuführung von mit Hemicellulosen verunreinigter wässriger alkalischer Lösung als Feedstrom an die Dialysemembran und zur Abführung von Dialysat von der Dialysemembran, und einem Gegenstrom-Flächenkanal, zur Zuführung von Prozesswasser als Gegenstrom an die Dialysemembran und zur Abführung von Diffusat von der Dialysemembran, wobei Feedstrom im Feedstrom-Flächenkanal und Gegenstrom im Gegenstrom-Flächenkanal durch die Dialysemembran getrennt sind und eine entgegengesetzte Strömungsrichtung aufweisen und wobei die Dialysemembran permeabel für Kationen ist, so dass alkalischen Kationen aus dem Feedstrom im Diffusat angereichert werden, dadurch gekennzeichnet, dass die Höhe des Feedstrom-Flächenkanals und des Gegenstrom-Flächenkanals jeweils zwischen 250 µm und 1000 µm, insbesondere zwischen 400 µm und 600 µm, betragen, und dass die Vorrichtung eine Entgasungseinrichtung, zur Entfernung von Gaskomponenten aus dem Prozesswasser, vor der lonentauscher-Diffusionsdialyse aufweist, durch welche das Prozesswasser geführt wird.

Ferner betrifft die Erfindung ein Verfahren zur Herstellung regenerierter cellulosischer Formkörper umfassend das zuvor genannte Verfahren und eine Vorrichtung zur Herstellung cellulosischer Formkörper.

### Stand der Technik

Es ist bekannt, dass sowohl bei der Herstellung von Zellstoff als auch bei der Alkalisierung von Zellstoff in einem Viskoseverfahren wässrige alkalische Lösungen als Stoffströme anfallen, welche mit Hemicellulosen angereichert sind.

Unter Hemicellulosen werden im Allgemeinen Polyosen aus Pentosen und/oder Hexosen, wie etwa Xylose, Arabinose, Glucose, Mannose oder Galactose verstanden. Hemicellulosen bezeichnen insbesondere alle Polysaccharide außer Cellulose, welche als Bestandteil pflanzlicher Zellwände, deren Matrix aus fibrillärer, teilweise kristalliner Cellulose besteht, vorkommen, sowie niedermolekulare Abbauprodukte der Cellulose, z.B. Hydroxycarbonsäuren, welche im Rahmen von Aufschlussprozessen gebildet werden können. Im Gegensatz zur Cellulose, welche ein nicht-verzweigtes Homopolymer aus Glucose ist, sind Hemicellulosen in der Regel verzweigte Heteropolymere aus oben genannten Pentosen und Hexosen. Meist weisen diese als Hauptkette ein Homopolymer auf, an welcher Verzweigungen aus weiteren Zuckern gebunden sind und so ein unregelmäßiges Makromolekül bilden. Hemicellulosen besitzen gegenüber Cellulose zudem deutlich geringere Polymerisationsgrade bzw. Kettenlängen. Solche Hemicellulosen können beispielsweise Xylane, Mannane, Galactane, oder andere Pentosane bzw. Hexosane sein.

Eine Unterscheidung zwischen Cellulosen (α-Fraktion) und Hemicellulosen (β- und γ-Fraktion) wird im Stand der Technik über die Löslichkeit in 17,5 %-iger Natronlauge definiert (WÜSTENBERG, Tanja. Cellulose und Cellulosederivate: Grundlagen, Wirkungen und Applikationen. Hamburg: Behr's Verlag, 2013.). Während β- und γ-Hemicellulosen in 17,5 %-iger Natronlauge gelöst werden können, ist α-Cellulose unlöslich. Bei der anschließenden Neutralisation fallen dann die β-Hemicellulosen aus, während die γ-Hemicellulosen in Lösung bleiben.

Aus dem Stand der Technik (CN 103349908 A) ist ein Verfahren zur Rückgewinnung von Natronlauge aus der in einem Viskoseverfahren anfallenden Presslauge, bekannt. Die Presslauge, welche im Viskoseverfahren beim Abpressen von Alkalicellulose anfällt und üblicherweise eine mit Hemicellulosen verunreinigte wässrige alkalische Lösung enthaltend Natronlauge ist, wird dabei als Feedstrom über eine Diffusionsdialyse geführt, um somit eine mit Natronlauge angereicherte rückgewonnene Lösung zu erhalten. Derartige Verfahren haben jedoch den Nachteil, dass zur Erreichung hoher Rückgewinnungsraten sehr große Membranflächen im Vergleich zu den Durchflussmengen eingesetzt werden müssen. Bei kompakter Bauweise leiden die Membranen allerdings sehr stark unter Leistungs- und Duchsatzabfall und insbesondere kurzen Standzeiten, was die Rentabilität des Verfahrens negativ beeinträchtigt.

### Offenbarung der Erfindung

Es ist daher eine Aufgabe der Erfindung ein Verfahren entsprechend der eingangs erwähnten Art bereitzustellen, welches eine längere Standzeit ermöglicht und damit eine höhere Wirtschaftlichkeit aufweist.

Die Erfindung löst die gestellte Aufgabe durch die Merkmale des unabhängigen Anspruchs 1.

Werden vor dem Zuführen zur Diffusionsdialyse Gaskomponenten aus dem Prozesswasser des Gegenstroms entfernt, so kann sichergestellt werden, dass sich im Gegenstrom der lonentauscher-Diffusionsdialyse keine Gasblasen bilden, welche den Stoffaustausch über die Dialysemembran negativ beeinträchtigen bzw. nachhaltig stören und schließlich zum Erliegen bringen können. Durch die Entfernung von Gaskomponenten kann nämlich ein Prozesswasser bereitgestellt werden, welches insbesondere im Wesentlichen frei von Gaskomponenten ist, womit die Standzeit der Dialysemembran deutlich erhöht werden kann. Wird nämlich Gaskomponenten enthaltendes Prozesswasser über die Dialysemembran geführt, so hat sich herausgestellt, dass sich durch die Strömung des Prozesswassers an der Dialysemembran Gaskomponenten lösen und so Gasblasen bilden können. Derartige Gasblasen können durch den kontinuierlichen Zustrom von Prozesswasser stetig anwachsen und schließlich den Stofftransport über die Dialysemembran vollständig blockieren. Zur Entfernung der angestauten Gasblasen und zur Wiederherstellung der Funktionsfähigkeit der Dialysemembran ist es hiernach notwendig, diese in regelmäßigen kurzen Abständen über Spülungen zu regenerieren. Wird jedoch ein im Wesentlichen von Gaskomponenten freies Prozesswasser als Gegenstrom in der lonentauscher-Diffusionsdialyse verwendet, so wird die Notwendigkeit von Spülungen erheblich reduziert und die Standzeit entsprechend verlängert. So kann ein erfindungsgemäßes Verfahren zum Recycling von wässrigen alkalischen Lösungen mit einem besonders geringen Wartungsaufwand geschaffen werden.

Im Allgemeinen wird festgehalten, dass unter Standzeit der lonentauscher-Diffusionsdialyse bzw. der Dialysemembran die maximale Betriebszeit bzw. Betriebsdauer bezeichnet wird, bis durch ein Abfallen der Ausbeute eine erneute Spülung, Reinigung oder ein Austausch der Dialysemembran notwendig ist.

Bei dem erfindungsgemäßen Verfahren werden die mit Hemicellulosen verunreinigte wässrige alkalische Lösung als Feedstrom und das im Wesentlichen von Gaskomponenten freie Prozesswasser als Gegenstrom über die Dialysemembran geführt, wobei der Gegenstrom in zum Feedstrom entgegengesetzter Strömungsrichtung über die Dialysemembran strömt. Feedstrom und Gegenstrom sind dabei durch die Dialysemembran getrennt, welche zumindest teilweise durchlässig ist. Zwischen der alkalischen Lösung im Feedstrom und dem Prozesswasser im Gegenstrom stellt sich ein lonen-Konzentrationsgradient ein, welcher durch Diffusion von Ionen durch die Dialysemembran ausgeglichen wird. Somit können Alkali-Ionen aus der wässrigen alkalischen Lösung über die Dialysemembran in das Prozesswasser diffundieren. Dadurch wird das Prozesswasser im Gegenstrom alkalisch angereichert und verlässt als Diffusat, welches die rückgewonnene alkalische Lösung bildet, die lonentauscher-Diffusionsdialyse. Der Feedstrom wird dabei gleichzeitig alkalisch abgereichert, wodurch die Konzentration an Hemicellulosen steigt, da diese die Dialysemembran aufgrund ihrer Partikelgröße nicht passieren können. Der an Hemicellulosen angereicherte Feedstrom verlässt danach als Dialysat die lonentauscher-Diffusionsdialyse und kann eventuell einer weiteren Verwendung zugeführt werden. Beispielsweise können die Hemicellulosen mit einem geeigneten Verfahren aus dem Dialysat abgetrennt werden.

Besonders vorteilhaft kann sich in dem zuvor beschriebenen Prozess auszeichnen, wenn die Dialysemembran eine Kationentauschermembran ist, welche insbesondere semipermeabel ist und dabei permeabel für positiv geladene Ionen ist, also positiv geladene Ionen durchlässt und negativ geladene Ionen zurückhält. Durch den Einsatz einer solchen Kationentauschermembran können nämlich insbesondere die Alkali-Kationen durch die Membran in den Gegenstrom transportiert werden und die negativ geladenen Co-Ionen zurückgehalten werden. Ist die wässrige alkalische Lösung eine wässrige Lösung aus Natronlauge, so können also Na⁺-Ionen die Dialysemembran vom Feedstrom zum Gegenstrom ungehindert passieren, während OH⁻-Ionen zurückgehalten werden. Gleichzeitig können zum Ladungsausgleich Auch H₃O⁺-Ionen vom Gegenstrom in den Feedstrom transportiert werden, wodurch im Wesentlichen eine Verdünnung des Dialysats durch Prozesswasser stattfindet.

In dem erfindungsgemäßen Verfahren können also durch Hemicellulosen verunreinigte wässrige alkalische Lösungen wiederaufbereitet werden, wobei die rückgewonnene alkalische Lösung im Wesentlichen frei von Hemicellulosen ist. Die rückgewonnene alkalische Lösung ist dabei zudem von hoher Reinheit und kann direkt in verschiedene Prozesse rückgeführt werden. So kann ein geschlossener Stoffkreislauf geschaffen werden, welcher die Umweltfreundlichkeit und Kosteneffizienz des Verfahrens erhöhen kann. Im Besonderen kann sich das Erfindungsgemäße Verfahren zur Rückgewinnung von Natronlauge, etwa im Rahmen eines Zellstoff- oder Viskoseverfahrens, eignen.

Das Erfindungsgemäße Verfahren eignet sich ganz besonders, wenn die durch Hemicellulosen verunreinigten wässrigen alkalischen Lösungen insbesondere Ablaugen aus einer Zellstoff- oder Viskoseproduktion sind. Im Besonderen kann die wässrige alkalische Lösung eine Presslauge sein, welche in der Viskoseproduktion beim Alkalisieren von Zellstoff mit Natronlauge zu Alkalizellulose und nachfolgendem Abpressen des alkalisierten Zellstoffs anfällt. Eine solche Presslauge enthält dabei typischerweise 10 - 20 Gew.-% Natronlauge und weist einen Gehalt an Hemicellulosen zwischen 0,5 - 5 Gew.-%, jeweils bezogen auf das Gesamtgewicht der Presslauge, auf.

Zudem wird im Allgemeinen festgehalten, dass unter Prozesswasser ein Wasser zur Verwendung in industriellen Anlagen verstanden wird, welches besondere, erhöhte Anforderungen an die Wasserqualität, insbesondere hinsichtlich Wasserhärte, Feststoffgehalt und Gasgehalt, erfüllen muss. Insbesondere handelt es sich bei dem Prozesswasser in der vorliegenden Erfindung um enthärtetes und/oder zumindest teilweise demineralisiertes Wasser.

Im Allgemeinen wird ebenso festgehalten, dass unter Gaskomponenten Stoffe verstanden werden, welche bei der Betriebstemperatur des Prozesswassers einen gasförmigen Aggregatzustand aufweisen, jedoch bei gegebenem Partialdruck eine Löslichkeit in Wasser aufweisen und somit zumindest teilweise im Prozesswasser als gelöste Komponenten vorliegen.

Wird das Prozesswasser vor dem Zuführen zur Diffusionsdialyse über eine Entgasungseinrichtung geführt, so kann auf verfahrenstechnisch einfache Weise ein Entfernen der Gaskomponenten aus dem Prozesswasser erfolgen. Werden aus dem Prozesswasser zumindest 90 % der darin enthaltenen Gaskomponenten entfernt, so kann ein im Wesentlichen von Gaskomponenten freies Prozesswasser bereitgestellt werden, welches die Zuverlässigkeit des erfindungsgemäßen Verfahrens weiter erhöhen kann. Besonders bevorzugt werden in der Entgasungseinrichtung 90% des im Prozesswasser gelösten O₂ und 95 % des im Prozesswasser gelösten CO₂ entfernt.

Die Gaskomponenten können besonders zuverlässig aus dem Prozesswasser entfernt werden, wenn das Prozesswasser in der Entgasungseinrichtung einem Vakuum ausgesetzt wird. Damit kann ein kostengünstiges und technisch einfaches Verfahren zur Entgasung des Prozesswassers bereitgestellt werden, welches für eine zuverlässige Entfernung der Gaskomponenten sorgen kann. Dabei kann das Prozesswasser etwa über eine gasdurchlässige, unter Vakuum stehende Membran geführt werden um einen hohen Durchsatz zu ermöglichen. Alternativ kann das Prozesswasser in der Entgasungseinrichtung auch beispielsweise mit Ultraschall (etwa über eine Sonotrode) oder thermisch behandelt werden um die Gaskomponenten zu entfernen.

Das erfindungsgemäße Verfahren zum Recycling von wässrigen alkalischen Lösungen kann sich besonders vorteilhaft auszeichnen, wenn das Prozesswasser vor dem Zuführen zur Diffusionsdialyse und nach dem Entfernen der Gaskomponenten einen Gehalt von maximal 1,0 mg/l an gelösten Gaskomponenten aufweist. Vorteilhafterweise beträgt der Gehalt an gelösten Gaskomponenten kleiner gleich 0,7 mg/l. Liegt der Gehalt an gelösten Gaskomponenten nämlich unter 1,0 mg/l, bzw. unter 0,7 mg/l, so kann die Bildung von Gasblasen an der Dialysemembran der lonentauscher-Diffusionsdialyse zuverlässig verhindert werden, wodurch eine lange Standzeit der Dialysemembran gewährleistet werden kann. Die Kosteneffizienz des Verfahrens kann so weiter verbessert werden.

Beträgt die Strömungsgeschwindigkeit des Feedstroms zwischen 0,1 und 1,0 mm/s, und die Strömungsgeschwindigkeit des Gegenstroms zwischen 0,5 und 2,5 mm/s, so können die Ausbeute der rückgewonnenen alkalischen Lösung und die Effizienz des Verfahrens weiter gesteigert werden. In einer besonders vorteilhaften Ausgestaltung des Verfahrens beträgt die Strömungsgeschwindigkeit des Feedstroms zwischen 0,2 und 0,5 mm/s, und die Strömungsgeschwindigkeit des Gegenstroms zwischen 1,0 und 1,5 mm/s.

Eine besonders hohe Ausbeute bei der Alkali-Rückgewinnung kann erzielt werden, wenn das Verhältnis von Strömungsgeschwindigkeit des Gegenstroms zu Strömungsgeschwindigkeit des Feedstroms zwischen 2:1 und 5:1 beträgt. Durch das gegenüber der wässrigen alkalischen Lösung im Feedstrom mit höherer Strömungsgeschwindigkeit geführte Prozesswasser im Gegenstrom kann der Ionen-Konzentrationsunterschied zwischen den Strömen konstant hoch gehalten werden, was wiederum einen konstant hohen lonenaustausch über die Dialysemembran in dem Verfahren ermöglicht. Durch die erhöhte Strömungsgeschwindigkeit des Prozesswassers findet jedoch auch eine stärkere Verdünnung der alkalischen Lösung im Diffusat durch Prozesswasser statt, was sich nachteilig auf die direkte Wiederverwendbarkeit der rückgewonnenen alkalischen Lösung auswirkt und zusätzliche Aufkonzentrierungsschritte nötig macht. Sind die Strömungsgeschwindigkeiten im Bereich der oben angegebenen Verhältnisse, so kann ein Verfahren mit hoher Ausbeute und Effizienz bei trotzdem moderater Verdünnung des Diffusats erreicht werden.

Die Ausbeute der rückgewonnenen alkalischen Lösung kann weiter erhöht werden, wenn die wässrige alkalische Lösung über eine Nanofiltration geführt wird, bevor diese im Feedstrom der lonentauscher-Diffusionsdialyse zugeführt wird. In der Nanofiltration wird die wässrige alkalische Lösung nämlich in ein alkalisches Permeat und in ein mit Hemicellulosen angereichertes Retentat aufgetrennt. Das Permeat weist dann im Wesentlichen rückgewonnene alkalische Lösung auf und kann zusammen mit der rückgewonnen alkalischen Lösung aus der lonentauscher-Diffusionsdialyse ausgeschieden werden um diese einer erneuten Verwendung zuzuführen. Das Retentat der Nanofiltration, welches Reste an wässriger alkalischer Lösung und den überwiegenden Teil der enthaltenen Hemicellulosen aufweist, wird dann zur weiteren Rückgewinnung der alkalischen Lösung als Feedstrom der lonentauscher-Diffusionsdialyse zugeführt.

Zusätzlich zur Nanofiltration kann die wässrige alkalische Lösung vor der Nanofiltration noch über eine Mikrofiltration geführt werden. Damit können grobe Verunreinigungen aus der wässrigen alkalischen Lösung entfernt werden, welche in der Nanofiltration und/oder in der lonentauscher-Diffusionsdialyse Ablagerungen bilden können. Das Permeat der Mikrofiltration wird dann vorzugsweise über die Nanofiltration geführt. Somit kann die Zuverlässigkeit des erfindungsgemäßen Verfahrens weiter verbessert werden.

Wird zur Reinigung der Dialysemembran in regelmäßigen Abständen Diffusat im Parallelstrom über die Dialysemembran geführt, so kann die Lebensdauer der Dialysemembran verlängert werden und somit ein besonders kosteneffizientes Verfahren geschaffen werden. Die Dialysemembran wird dabei vorzugsweise durch das im Wesentlichen aus rückgewonnener alkalischer Lösung bestehende Diffusat derart gespült, dass das Dialysat sowohl im Feedstrom als auch im Gegenstrom in gleicher Strömungsrichtung in einem Kreislauf geführt wird. Damit können effizient Ablagerungen, etwa von Hemicellulosen, von der Dialysemembran entfernt werden und der ursprüngliche Durchsatz wiederhergestellt werden.

Das Verfahren kann sich insbesondere weiter auszeichnen, wenn der Feedstrom und der Gegenstrom jeweils über durch die Dialysemembran getrennte Flächenkanäle geführt werden. In einer weiteren Ausgestaltung kann zudem das Dialysat mit dem Feedstrom über einen Flächenkanal strömungsverbunden sein und gleichzeitig das Diffusat mit dem Gegenstrom über einen weiteren Flächenkanal strömungsverbunden sein. Das erfindungsgemäße Verfahren kann also die Verwendung von Flächenkanälen mit bevorzugt niedrigen Bauhöhen ermöglichen, welche die Effizienz des Verfahrens weiter verbessern. Zudem kann das Verfahren durch die Verwendung von Flächenkanälen technisch einfach realisiert werden. Die Flächenkanäle können beispielsweise durch voneinander beabstandete, parallele Platten gebildet sein, zwischen denen sich die Dialysemembran erstreckt.

Zudem kann bei dem erfindungsgemäßen Verfahren die lonentauscher-Diffusionsdialyse mehrere Dialysemembranen aufweisen, wodurch der Durchsatz des Verfahrens weiter verbessert werden kann. Ein solches zuvor genanntes Verfahren mit mehreren Dialysemembranen kann weiter verbessert werden, wenn die Dialysemembranen dabei in einem Membranstapel parallel zueinander angeordnet sind und jeweils abwechselnd Feedstrom und Gegenstrom zwischen zwei Dialysemembranen zugeführt werden. Ein kosteneffizientes Verfahren kann so geschaffen werden.

Die Erfindung hat sich außerdem die Aufgabe gestellt eine eingangs erwähnte Vorrichtung zur Durchführung des Verfahrens bereitzustellen, welche auf technisch einfache Weise ein Zusetzen der Dialysemembran mit Gasblasen verhindert.

Die Erfindung löst die gestellte Aufgabe durch die Merkmale des Anspruchs 9.

Weist die Vorrichtung eine Entgasungseinrichtung, zur Entfernung von Gaskomponenten aus dem Prozesswasser, vor der lonentauscher-Diffusionsdialyse auf, durch welche das Prozesswasser geführt wird, so können zuverlässig Gaskomponenten aus dem Prozesswasser entfernt werden. In der lonentauscher-Diffusionsdialyse wird nämlich die Dialysemembran zwischen niedrigen Flächenkanälen geführt um die Oberfläche zwischen den Stoffströmen und der Dialysemembran zu maximieren. In den niedrigen Flächenkanälen kommt es jedoch zu Strömungsverhältnissen, welche die Bildung von Gasblasen durch Ausgasung der Gaskomponenten fördern. Zudem ist durch die Flächenkanäle der Abtransport der Gasblasen verhindert, womit es zu einer Akkumulation der Gasblasen in den Flächenkanälen und schließlich zu einem Blockieren des Stoffaustauschs über die Dialysemembran kommt. Demgemäß kann eine Entfernung der Gaskomponenten aus dem Prozesswasser des Gegenstroms die Bildung von Gasblasen in den Flächenkanälen zuverlässig verhindern. Dies ist insbesondere der Fall, wenn die Höhe der Flächenkanäle zwischen 250 µm und 1000 µm, bzw. in einer bevorzugten Ausgestaltung der Erfindung zwischen 400 µm und 600 µm beträgt, da solche Flächenkanäle mit niedriger Bauhöhe verstärkt unter dem zuvor dargelegten Problem leiden. Die Entgasungseinrichtung kann in der Vorrichtung nämlich verhindern, dass Prozesswasser mit zu hohem Gehalt an Gaskomponenten an die Dialysemembran geführt werden und somit im Wesentlichen keine Gasblasen gebildet werden. Eine zuverlässige Vorrichtung kann somit geschaffen werden, welche eine lange Standzeit ermöglicht, kann somit geschaffen werden.

Sind das Dialysat mit der wässrigen alkalischen Lösung über den Feedstrom-Flächenkanal und das Diffusat mit dem Prozesswasser über den Gegenstrom-Flächenkanal strömungsverbunden, so kann eine konstruktiv einfache Vorrichtung zur Rückgewinnung von alkalischer Lösung geschaffen werden. Sind nämlich wässrige alkalische Lösung und Dialysat im Feedstrom strömungsverbunden, so kann die zur Rückgewinnung vorgesehene wässrige alkalische Lösung nämlich an der Dialysemembran entlangströmen und während der gesamten Kontaktzeit alkalische Ionen an den Gegenstrom abgeben. So werden die Alkali-Ionen aus dem Feedstrom entfernt, während Hemicellulosen im Feedstrom verbleiben. Sind zudem das Prozesswasser und das Diffusat im Gegenstrom strömungsverbunden, so kann durch die kontinuierliche Strömung von Prozesswasser über die Dialysemembran ein konstant hoher lonenkonzentrationsgradient zwischen Feedstrom und Gegenstrom erzeugt werden, welcher für einen guten lonentransport über die Dialysemembran maßgeblich ist.

Die Entgasungseinrichtung in der Vorrichtung kann konstruktiv einfach realisiert werden, wenn diese eine gasdurchlässige, unter Vakuum stehende Membran aufweist, über welche das Prozesswasser in der Entgasungseinrichtung geführt wird, um die Gaskomponenten aus dem Prozesswasser zu entfernen. Durch die Entgasung des Prozesswassers über eine unter Vakuum stehende Membran kann die Entgasungseinrichtung nämlich sehr zuverlässig bei hohem Durchsatz Gaskomponenten aus dem Prozesswasser entfernen. Dabei können in der Entgasungseinrichtung insbesondere zumindest 90 % der Gaskomponenten aus dem Prozesswasser entfernt werden.

Weist die Dialysemembran einen thermoplastischen Kunststoff, insbesondere ein Polyetheretherketon (PEEK), auf, so kann eine kostengünstige und zuverlässige Vorrichtung geschaffen werden. PEEK Membranen können sich dabei durch eine sehr hohe mechanische und chemische Stabilität auszeichnen, wodurch eine lange Standzeit erreicht werden kann. Zudem können sehr dünne Membranen, insbesondere mit einer Dicke von kleiner gleich 100 µm, ohne Einbußen der mechanischen und chemischen Stabilität zum Einsatz kommen, wodurch der Durchsatz weiter erhöht werden kann.

Weist die lonentauscher-Diffusionsdialyse mehrere Dialysemembranen und mehrere Feedstrom- und Gegenstrom-Flächenkanäle auf, wobei zwischen zwei Dialysemembranen jeweils zumindest ein Feedstrom-Flächenkanal oder ein Gegenstrom-Flächenkanal angeordnet ist, so kann die zur Verfügung stehende Dialysemembranfläche effektiv vergrößert werden. Kommen nämlich mehrere Dialysemembranen zum Einsatz, so können nämlich Feedstrom und Gegenstrom jeweils parallel über alle Dialysemembranen geführt werden und somit der Durchsatz der Vorrichtung deutlich erhöht werden.

Sind zudem die Dialysemembranen in einem Membranstapel parallel zueinander angeordnet, wobei jeweils abwechselnd ein Feedstrom-Flächenkanal und ein Gegenstrom-Flächenkanal zwischen zwei Dialysemembranen angeordnet ist, so kann trotz hoher Dialysemembranfläche eine besonders kompakte Vorrichtung geschaffen werden, welchen einen hohen Durchsatz bei geringem Platzbedarf ermöglicht.

Das erfindungsgemäße Verfahren kann sich zudem vorteilhaft in einem Verfahren zur Herstellung regenerierter cellulosischer Formkörper gemäß Anspruch 15 eignen.

In einem solchen Verfahren zur Herstellung regenerierter cellulosischer Formkörper, wie beispielsweise einem Viskose- oder Modalverfahren, wird nämlich ein Zellstoff in einer Alkalisierungsstufe mit Natronlauge alkalisiert um eine Alkalizellulose zu erhalten. Die Alkalizellulose, also der alkalisierte Zellstoff, wird danach durch Pressen von der überschüssigen Natronlauge abgetrennt, welche als Presslauge bezeichnet wird und Hemicellulosen in einer wässrigen alkalischen Lösung aufweist. Die Presslauge ist somit eine durch Hemicellulosen verunreinigte wässrige alkalische Lösung, welche danach in einem Verfahren gemäß einem der Ansprüche 1 bis 8 in eine Fraktion enthaltend im Wesentlichen Hemicellulosen und in eine Fraktion enthaltend im Wesentlichen Natronlauge aufgetrennt wird. Die Fraktion enthaltend im Wesentlichen Hemicellulosen wird dabei aus dem Dialysat der lonentauscher-Diffusionsdialyse gebildet und die Fraktion enthaltend im Wesentlichen Natronlauge wird dabei aus dem Diffusat der lonentauscher-Diffusionsdialyse gebildet. Ein solches Verfahren kann sich durch eine hohe Rückgewinnungs-Ausbeute von Natronlauge auszeichnen, was die Wirtschaftlichkeit des Verfahrens deutlich verbessern kann.

Ein solches Verfahren zur Herstellung regenerierter cellulosischer Formkörper kann sich weiter besonders auszeichnen, wenn die Fraktion enthaltend im Wesentlichen Natronlauge an die Alkalisierungsstufe zur erneuten Verwendung im Verfahren - vorzugsweise im Viskose- oder Modalprozess -, insbesondere zur weiteren Alkalisierung von Zellstoff, rückgeführt wird. Damit kann ein Verfahren mit einem geschlossenen Stoffkreislauf geschaffen werden, welches ressourcensparend und kosteneffizient betrieben werden kann.

Die Erfindung betrifft weiter eine Vorrichtung zur Herstellung regenerierter cellulosischer Formkörper aus Zellstoff.

Eine solche Vorrichtung kann sich erfindungsgemäß auszeichnen, wenn die Vorrichtung zur Herstellung regenerierter cellulosischer Formkörper aus Zellstoff, insbesondere nach dem Viskose- oder Modalverfahren, eine Alkalisierungsstufe in welcher Zellstoff mit Natronlauge zu Alkalizellulose alkalisiert und durch Abpressen von der überschüssigen Presslauge befreit wird und eine Rückgewinnungsstufe mit einer lonentauscher-Diffusionsdialyse zur Auftrennung der Presslauge in eine Fraktion enthaltend im Wesentlichen Hemicellulosen und in eine Fraktion enthaltend im Wesentlichen Natronlauge aufweist, wobei die Presslauge aus der Alkalisierungsstufe an die Rückgewinnungsstufe zugeführt wird und die im Wesentlichen Natronlauge enthaltende Fraktion an die Alkalisierungsstufe rückgeführt wird.

Wird nämlich die Presslauge aus der Alkalisierungsstufe an die Rückgewinnungsstufe zugeführt, welche eine lonentauscher-Diffusionsdialyse aufweist, so kann eine Vorrichtung geschaffen werden die konstruktiv einfache in der Rückgewinnungsstufe die Presslauge in eine Fraktion enthaltend im Wesentlichen Hemicellulosen und in eine Fraktion enthaltend im Wesentlichen Natronlauge auftrennt. Die im Wesentlichen Natronlauge enthaltende Fraktion kann dann an die Alkalisierungsstufe rückgeführt werden, wobei eine Vorrichtung zur Herstellung regenerierter cellulosischer Formkörper mit einem geschlossenen Natronlauge-Kreislauf geschaffen werden kann. Eine solche Vorrichtung kann sich durch besonders hohe Effizienz auszeichnen.

Eine solche zuvor genannte Vorrichtung kann sich besonders auszeichnen, wenn die Rückgewinnungsstufe zur Auftrennung der Presslauge in eine Fraktion enthaltend im Wesentlichen Hemicellulosen und in eine Fraktion enthaltend im Wesentlichen Natronlauge eine Vorrichtung, enthaltend die lonentauscher-Diffusionsdialyse, gemäß einem der Ansprüche 9 bis 14 aufweist.

### Kurzbeschreibung der Zeichnungen

Im Folgenden werden die Ausführungsarten der Erfindung anhand der Zeichnungen beschrieben. Es zeigen:
- Fig. 1: eine schematische Darstellung einer Vorrichtung und eines Verfahrens zur Rückgewinnung von alkalischer Lösung gemäß einer ersten Ausführungsform,
- Fig. 2: eine schematische Darstellung einer Vorrichtung und eines Verfahrens zur Rückgewinnung von alkalischer Lösung gemäß einer zweiten Ausführungsform,
- Fig. 3: eine schematische Darstellung eines Verfahrens zur Rückgewinnung von alkalischer Lösung gemäß einer dritten Ausführungsform,
- Fig. 4: ein Flussdiagramm zur schematischen Darstellung eines Verfahrens zur Herstellung regenerierter cellulosischer Formkörper, und
- Fig. 5: ein Diagramm mit Versuchs-Messwerten zu dem erfindungsgemäßen Verfahren zur Rückgewinnung von alkalischer Lösung.

### Wege zur Ausführung der Erfindung

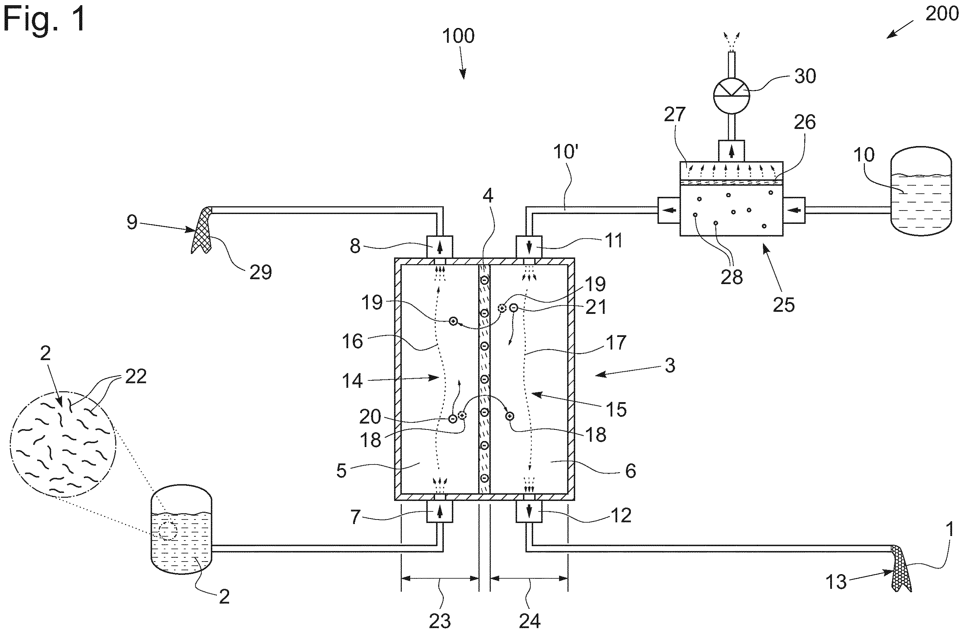

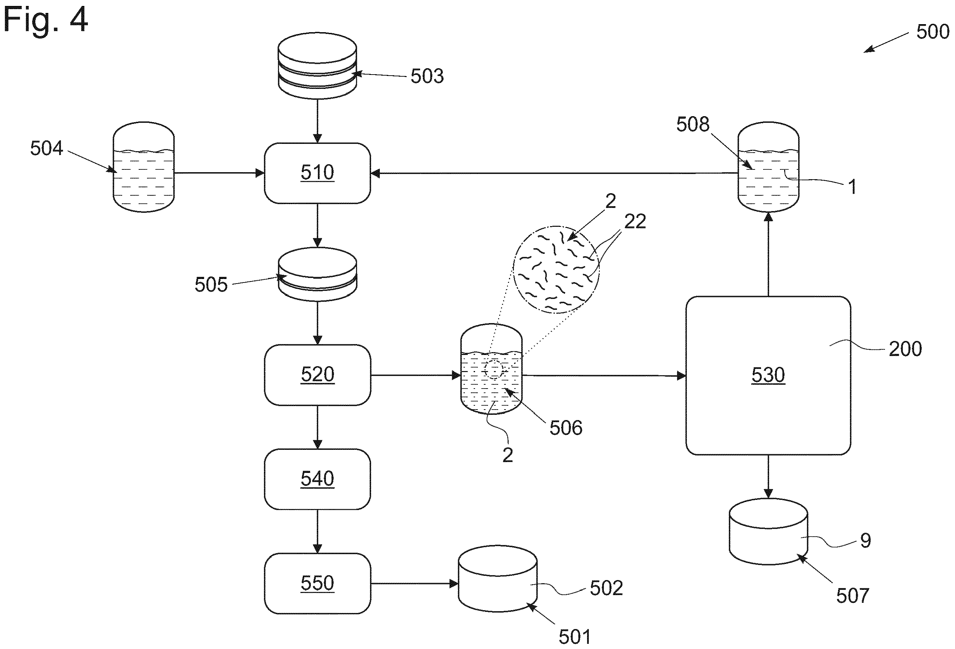

In Fig. 1 ist eine Vorrichtung 100 gemäß einer ersten Ausführungsform zur Rückgewinnung von alkalischer Lösung 1 aus mit Hemicellulosen 22 verunreinigter wässriger alkalischer Lösung 2 dargestellt. Die Vorrichtung 100 umfasst dabei eine lonentauscher-Diffusionsdialyse 3 mit einer Dialysemembran 4. Die Dialysemembran 4 ist dabei zwischen zwei Flächenkanälen 5, 6 angeordnet. Der Feedstrom-Flächenkanal 5 weist eine Zuführung 7 für die mit Hemicellulosen 22 verunreinigte wässrige alkalische Lösung 2 an die Dialysemembran 4 und eine Abführung 8 für das Dialysat 9 von der Dialysemembran 4 auf. Der Gegenstrom-Flächenkanal 6 weist hingegen eine Zuführung 11 für das Prozesswasser 10 an die Dialysemembran 4 und eine Abführung 12 für das Diffusat 13 von der Dialysemembran 4 auf. Die wässrige alkalische Lösung 2 ist mit dem Dialysat 9 über den Feedstrom-Flächenkanal 5 strömungsverbunden und bildet mit diesem den Feedstrom 14 der lonentauscher-Diffusionsdialyse 3. Äquivalent dazu ist das Prozesswasser 10 mit dem Diffusat 13 über den Gegenstrom-Flächenkanal 6 strömungsverbunden und bildet mit diesem den Gegenstrom 15 der lonentauscher-Diffusionsdialyse 3. Feedstrom 14 und Gegenstrom 15 sind durch die Dialysemembran 4 getrennt und weisen zueinander entgegengesetzte Strömungsrichtungen 16, 17 auf. Die Dialysemembran 4 ist semipermeabel für positiv geladene Ionen (Kationen) 18, 19, so dass beispielsweise alkalische Kationen 18 aus dem Feedstrom 14 durch die Dialysemembran 4 in den Gegenstrom 15 diffundieren können. Die Dialysemembran 4 enthält in der Ausführungsform einen thermoplastischen Kunststoff, nämlich Polyetheretherketon. Im Falle von Natronlauge als wässriger alkalischer Lösung 2, beispielsweise als Abfallprodukt einer Zellstoff-, Viskose- oder Modalproduktion 500 (vgl. Fig. 4), sind die alkalischen Kationen 18 Na⁺-Ionen. Die diffundierten alkalischen Kationen 18 reichern sich dann im Gegenstrom 15 an und bilden dort das Diffusat 13 aus, welches die rückgewonnene alkalische Lösung 1 enthält. Gleichzeitig können zum Ladungsausgleich Kationen 19 aus dem Gegenstrom 15 durch die Dialysemembran 4 in den Feedstrom 14 diffundieren. Da der Gegenstrom 15 Prozesswasser 10 enthält, sind die Kationen 19 aus dem Gegenstrom 15 im Wesentlichen H₃O⁺-Ionen aus dem Prozesswasser 10. Negativ geladene Ionen (Anionen) 20, 21, im Besonderen OH⁻-Ionen, werden aufgrund der lonenselektivität der Dialysemembran 4 in den jeweiligen Strömen 14, 15 zurückgehalten und können dort wiederum mit den jeweils diffundierten Kationen 18, 19 Bindungen eingehen. Der Feedstrom 15 wird also von alkalischen Kationen 18 abgereichert und mit Kationen 19 aus dem Prozesswasser 10 angereichert, während die Hemicellulosen 22 durch die Dialysemembran 4 zurückgehalten werden und schließlich über das Dialysat 9 ausgeschieden werden. Das Dialysat 9 weist somit den mit Prozesswasser 10 verdünnten, Hemicellulosen 22 enthaltenden Rückstand 29 auf, welcher optional in weiteren Verfahrensschritten aufbereitet werden kann.

Die Flächenkanäle 5, 6 weisen jeweils eine Höhe 23, 24 auf, welche zwischen 250 µm und 1000 µm beträgt. In einer weiteren bevorzugten Ausführungsform der Erfindung beträgt die Höhe 23, 24 der Flächenkanäle 5, 6 jeweils zwischen 400 µm und 600 µm. Durch die niedrige Höhe 23, 24 der Flächenkanäle 5, 6 wird ein großes Verhältnis zwischen Fläche der Dialysemembran 4 und Höhe 23, 24 der Flächenkanäle 5, 6 erreicht, welches für einen hohen Durchsatz von Ionen 18, 19 durch die Dialysemembran 4 ursächlich ist. Zugleich können sich in den Flächenkanälen 5, 6 Gasblasen, durch Ausgasung von Gaskomponenten, bilden. Die gebildeten Gasblasen können aufgrund der niedrigen Höhen 23, 24 nur unzureichend aus dem jeweiligen Flächenkanal 5, 6 abtransportiert werden, wodurch die Gasblasen schließlich den Flächenkanal 5, 6 und somit auch die Dialysemembran 4 blockieren.

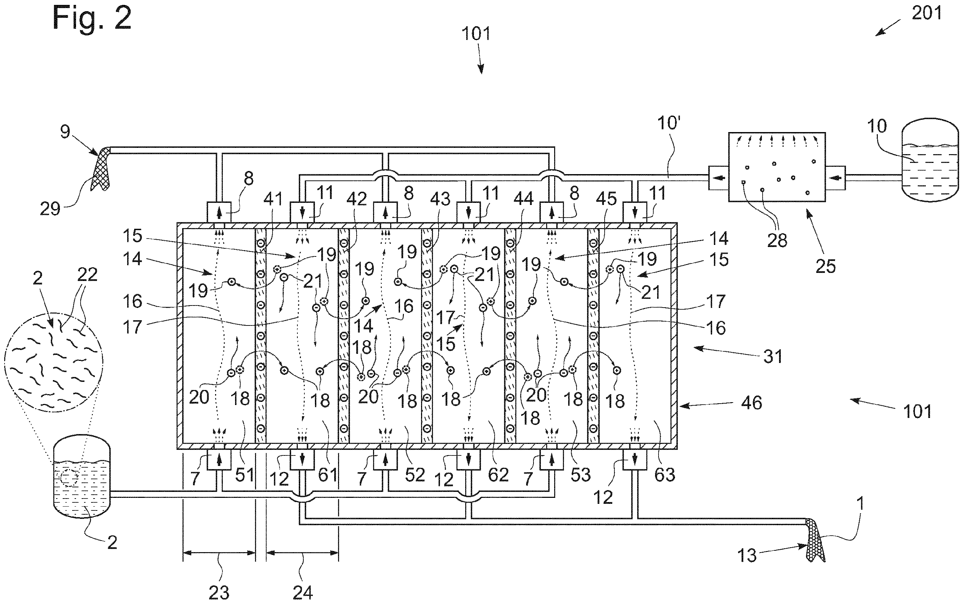

Zur Vermeidung der Bildung von Gasblasen weist die Vorrichtung 100 eine der lonentauscher-Diffusionsdialyse 3 vorgeschaltete Entgasungseinrichtung 25 auf, durch welche das Prozesswasser 10 geführt wird, bevor es über die Zuführung 11 als entgastes Prozesswasser 10' in den Gegenstrom-Flächenkanal 6 geleitet wird. Gemäß der ersten in Fig. 1 dargestellten Ausführungsform der Vorrichtung 100 wird das Prozesswasser 10 in der Entgasungseinrichtung 25 über eine gasdurchlässige Membran 26 geführt, welche unter Vakuum 27 steht. Dabei werden die im Prozesswasser 10 gelösten Gaskomponenten 28, im Besonderen O₂ und CO₂, aus diesem entfernt. Das entgaste Prozesswasser 10', welches somit im Wesentlichen frei von Gaskomponenten 28 ist, wird danach dem Gegenstrom 15 der lonentauscher-Diffusionsdialyse 3 zugeleitet. Die Entgasungseinrichtung 25 kann dazu beispielsweise, wie in Fig. 1 gezeigt, eine Pumpe 30 zur Erzeugung des Vakuums 27 aufweisen. Alternativ kann die Entgasungseinrichtung 25, wie in dem Ausführungsbeispiel der Vorrichtung 101 in Fig. 2 gezeigt, auch jede andere Vorrichtung sein, welche eine zuverlässige Entfernung von Gaskomponenten 28 in dem Prozesswasser 10 erreicht, wie beispielsweise eine Sonotrode.

In Fig. 2 ist eine weitere Vorrichtung 101 gemäß einer zweiten Ausführungsform der Erfindung dargestellt. Die Vorrichtung 101 weist dabei ebenso eine lonentauscher-Diffusionsdialyse 31 auf, welche mehrere Dialysemembranen 41, 42, 43, 44 und 45 umfasst. Die lonentauscher-Diffusionsdialyse 31 weist auch mehrere Feedstrom-Flächenkanäle 51, 52, 53 und mehrere Gegenstrom-Flächenkanäle 61, 62, 63 auf, wobei zwischen den Dialysemembranen 41 bis 45 jeweils ein Feedstrom-Flächenkanal 51, 52, 53 oder ein Gegenstrom-Flächenkanal 61, 62, 63 angeordnet ist. Die Dialysemembranen 41 bis 45 bilden dabei einen Membranstapel 46 in dem diese parallel zueinander angeordnet sind. In dem Membranstapel 46 wechseln sich dann zwischen den Dialysemembranen 41 bis 45 jeweils ein Feedstrom-Flächenkanal 52, 53 und ein Gegenstrom-Flächenkanal 61, 62 ab. Die randseitigen Flächenkanäle 51, 63 schließen dabei den Membranstapel 46 ab.

Über Zuführungen 7 wird die mit Hemicellulosen 22 verunreinigte wässrige alkalische Lösung 2 gleichzeitig in alle Feedstrom-Flächenkanäle 51, 52, 53 eingeleitet, damit die wässrige alkalische Lösung 2 parallel an alle Dialysemembranen 41 bis 45 zugeführt wird. Dies hat eine effektive Vergrößerung der Dialysemembran-Fläche zur Folge und erhöht den Durchsatz der Vorrichtung 101. Weiter weisen die Feedstrom-Flächenkanäle 51, 52, 53 der lonentauscher-Diffusionsdialyse 31 Abführungen 8 auf, über welche das Dialysat 9, das den Hemicellulosen 22 enthaltenden Rückstand 29 bildet, von den Dialysemembranen 41 bis 45 abgeführt werden kann. Die Gegenstrom-Flächenkanäle 61, 62, 63 weisen wiederum Zuführungen 11 für das Prozesswasser 10, beziehungsweise für das in der Entgasungseinrichtung 25 entgaste Prozesswasser 10', an die Dialysemembranen 41 bis 45, sowie Abführungen 12 für das Diffusat 13 von den Dialysemembranen 41 bis 45 auf.

Die wässrige alkalische Lösung 2 ist damit über alle Feedstrom-Flächenkanäle 51, 52, 53 mit dem Dialysat 9 strömungsverbunden und bildet in diesen den Feedstrom 14 aus. Der Gegenstrom 15 wird dagegen in den Gegenstrom-Flächenkanälen 61, 62, 63 ausgebildet, über welche das entgaste Prozesswasser 10' mit dem Diffusat 13 strömungsverbunden ist. Feedstrom 14 und Gegenstrom 15 sind gegenüber dem ersten Ausführungsbeispiel in Fig. 1 durch mehrere Dialysemembranen 41 bis 45 getrennt und weisen jeweils zueinander entgegengesetzte Strömungsrichtungen 16, 17 auf.

Die Flächenkanäle 51, 52, 53, 61, 62, 63 weisen in der Vorrichtung 101, wie bereits in Fig. 1 für die Vorrichtung 100 dargestellt, jeweils eine Höhe 23, 24 auf, welche zwischen 250 µm und 1000 µm beträgt. Die Feedstrom-Flächenkanäle 51, 52, 53 weisen dabei jeweils eine Höhe 23 auf und die Gegenstrom-Flächenkanäle 61, 62, 63 weisen dabei jeweils eine Höhe 24 auf (in Fig. 2 nur für die Flächenkanäle 51, 62 dargestellt).

Wie bereits für die erste Ausführungsform erläutert, können auch in dem Membranstapel 46 der zweiten Ausführungsform die Kationen 18, 19 von dem Feedstrom 14 in den Gegenstrom 15 durch die semipermeablen Dialysemembranen 41 bis 45 diffundieren. Dabei findet wieder eine Anreicherung von Kationen 18 im Gegenstrom 15 statt, wobei das Diffusat 13 parallel in den Gegenstrom-Flächenkanälen 61, 62, 63 gebildet wird und als gemeinsame rückgewonnene alkalische Lösung 1 über die Abführungen 12 aus der lonentauscher-Diffusionsdialyse 31 ausgeschieden wird. Zum Ladungsausgleich diffundieren wiederum Kationen 19 aus dem Gegenstrom 15 durch die Dialysemembran 4 in den Feedstrom 14. Durch die Anordnung in dem Membranstapel 46 können die Kationen 18 nun jeweils gleichzeitig von dem Feedstrom-Flächenkanal 52 bzw. 53 in die zwei benachbarten Gegenstrom-Flächenkanäle 61, 62 bzw. 62, 63 diffundieren, sowie die Kationen 19 von dem Gegenstrom-Flächenkanal 61 bzw. 62 in die zwei benachbarten Feedstrom-Flächenkanäle 51, 52 bzw. 52, 53 diffundieren, was die Effizienz und den Durchsatz der Diffusion deutlich steigert. Die Anzahl der Flächenkanäle 51, 52, 53, 61, 62, 63 ist nicht begrenzt und kann beliebig an die gegebenen Verhältnisse angepasst werden.

In Fig. 1 ist außerdem ein Verfahren 200 dargestellt, gemäß einer ersten Ausführungsform der Erfindung, zur Rückgewinnung von alkalischer Lösung 1 aus mit Hemicellulosen 22 verunreinigter wässriger alkalischer Lösung 2. Die wässrige alkalische Lösung 2 wird bei dem Verfahren 200 als Feedstrom 14 über eine lonentauscher-Diffusionsdialyse 3 geführt. Zudem wird entgastes Prozesswasser 10' als Gegenstrom 15 über die lonentauscher-Diffusionsdialyse 3 geführt, wobei darin Feedstrom 14 und Gegenstrom 15 mit entgegengesetzten Strömungsrichtungen 16, 17 über zumindest eine Dialysemembran 4 geführt werden. Durch die Strömung über die Dialysemembran 4, welche semipermeabel ist, werden der Feedstrom 14 und der Gegenstrom 15 in ein alkalisch angereichertes Diffusat 13 und ein mit Hemicellulosen angereichertes Dialysat 9 umgesetzt. Das Diffusat 13, welches im Gegenstrom 15 anfällt, bildet am Ende des Verfahrens die rückgewonnene alkalische Lösung 1.

Bevor das Prozesswasser 10 als entgastes Prozesswasser 10' an die lonentauscher-Diffusionsdialyse 3 als Gegenstrom 15 zugeführt wird, werden aus dem Prozesswasser 10 Gaskomponenten 28 entfernt. In einer Ausführungsform der Erfindung wird dazu das Prozesswasser 10 über eine Entgasungseinrichtung 25 geleitet, worin das Prozesswasser 10 in Kontakt mit einer gasdurchlässigen Membran 26 gebracht wird, welche unter Vakuum 27 steht und damit die Gaskomponenten 28 aus dem Prozesswasser 10 entfernt. Das entgaste Prozesswasser 10' wird dann der lonentauscher-Diffusionsdialyse 3 zugeführt. Durch die Entgasungseinrichtung 25 werden dem Prozesswasser 10 zumindest 90 % der darin befindlichen Gaskomponenten 28 entfernt. Im Besonderen werden dabei zumindest 90 % des O₂ und 95 % des CO₂ aus dem Prozesswasser 10 entfernt. Beim Zuführen an die lonentauscher-Diffusionsdialyse 3 weist das entgaste Prozesswasser 10' somit nur mehr maximal einen Gehalt von 1,0 mg/l an gelösten Gaskomponenten 28 auf.

Um eine effiziente Alkali-Umsetzung in der lonentauscher-Diffusionsdialyse 3 aus dem Feedstrom 14 in das Diffusat 13 zu ermöglichen, besitzt der Feedstrom 14 eine Strömungsgeschwindigkeit in dem Feedstrom-Strömungskanal 5 zwischen 0,1 mm/s und 1,0 mm/s. In einer weiteren vorteilhaften Ausführungsvariante beträgt die Strömungsgeschwindigkeit im Feedstrom-Strömungskanal 5 zwischen 0,2 und 0,5 mm/s. Die Strömungsgeschwindigkeit des Gegenstroms 15 im Gegenstrom-Strömungskanal 6 beträgt dagegen erfindungsgemäß zwischen 0,5 mm/s und 2,5 mm/s. In einer weiteren Ausführungsvariante beträgt die Strömungsgeschwindigkeit im Gegenstrom-Strömungskanal 6 zwischen 1,0 und 1,5 mm/s.

Zur Durchführung des Verfahrens 200 wird, wie in Fig. 1 dargestellt, eine Vorrichtung 100 verwendet, welche die lonentauscher-Diffusionsdialyse 3 aufweist.

Alternativ kann ein Verfahren 201 gemäß einer weiteren Ausführungsart der Erfindung unter Verwendung einer Vorrichtung 101 durchgeführt werden, wie in Fig. 2 dargestellt. In einem solchen Verfahren 201 weist die lonentauscher-Diffusionsdialyse 31 mehrere Dialysemembranen 41 bis 45 auf. Die Dialysemembranen 41 bis 45 sind dabei in einem Membranstapel 46 parallel zueinander angeordnet und Feedstrom 14 sowie Gegenstrom 16 werden jeweils abwechselnd zwischen zwei Dialysemembranen 41 bis 45 zugeführt. Damit kann das Verfahren 201 sehr kosteneffizient mit hohem Durchsatz betrieben werden.

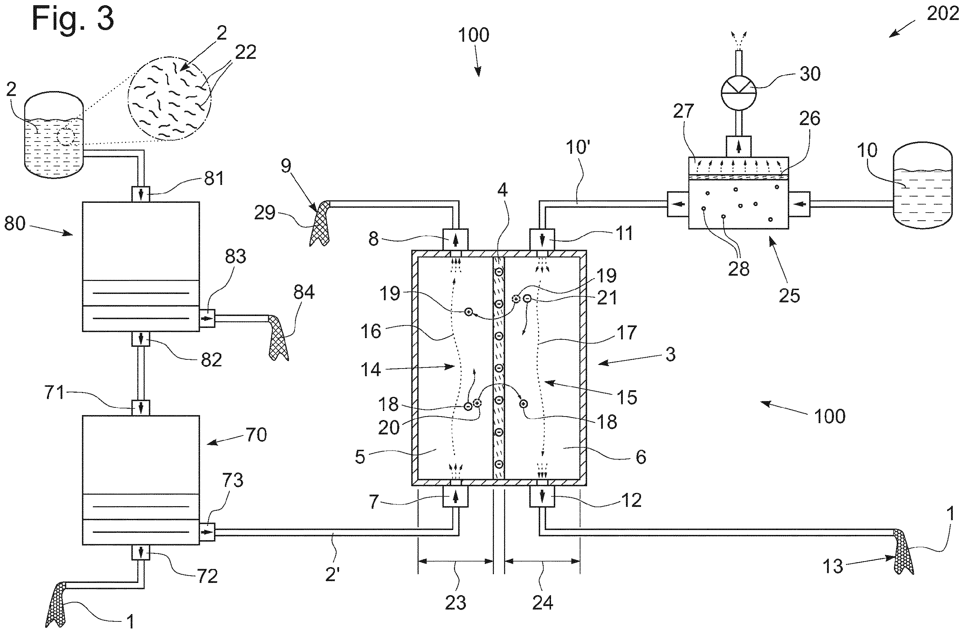

In Fig. 3 ist ein Verfahren 202 gemäß einer dritten Ausführungsform der Erfindung dargestellt, welches, wie für das in Fig. 1 dargestellte Verfahren 200, eine Vorrichtung 100 mit einer lonentauscher-Diffusionsdialyse 3 mit einer einzelnen Dialysemembran 4 aufweist. Bei dem Verfahren 202 wird die wässrige alkalische Lösung 2 vor dem Zuführen zur lonentauscher-Diffusionsdialyse 3 über eine Nanofiltration 70 geführt. Als Feed 71 wird der Nanofiltration 70 die wässrige alkalische Lösung 2 direkt oder das Permeat 82 einer vorgeschalteten Mikrofiltration 80 zugeführt, worin diese in ein alkalisch angereichertes Permeat 72 und in ein mit Hemicellulosen angereichertes Retentat 73 aufgetrennt wird. Das Permeat 72 wird ausgeschieden und das Retentat 73 als Feedstrom 14 der lonentauscher-Diffusionsdialyse 3 zugeführt. Da das Permeat 72 aus der Nanofiltration 70 bereits eine hohe Alkali-Konzentration aufweist und fast vollständig frei von Hemicellulosen 22 ist, kann das Permeat 72 als rückgewonnene alkalische Lösung 1 zusammen mit dem Diffusat 13 der lonentauscher-Diffusionsdialyse 3 ausgeschieden werden. Das Retentat 73 der Nanofiltration 70 weist dagegen den Rückstand an Hemicellulosen und einen Teil der ursprünglichen Alkali-Menge auf. Das Retentat 73 wird dann als gefilterte wässrige alkalische Lösung 2' über die lonentauscher-Diffusionsdialyse 3 geführt um die restliche Alkali-Konzentration ins Diffusat 13 umzusetzen.

Wie in Fig. 3 gezeigt, wird zusätzlich zu der Nanofiltration 70 die wässrige alkalische Lösung 2 zuvor über eine Mikrofiltration 80 geführt, welche die groben Verunreinigungen 84 aus der wässrigen Lösung 2 entfernt. Die wässrige alkalische Lösung 2 wird dabei als Feed 81 der Mikrofiltration 80 zugeführt, und das Permeat 82 der Mikrofiltration 80 als Feed 71 der Nanofiltration 70 zugeführt. Die im Retentat 83 enthaltenen Verunreinigungen 84 werden entsprechend ausgeschieden.

In den Verfahren 200, 201 und 202 gemäß den Fig. 1, 2 und 3 kann eine Reinigung der Dialysemembranen 4 und 41 bis 45 in regelmäßigen Abständen erfolgen um Ablagerungen, etwa durch Hemicellulosen 22, zu entfernen. Dabei wird durch die Feedstrom-Flächenkanäle 5, 51, 52, 53 und durch die Gegenstrom-Flächenkanäle 6, 61, 62, 63 Diffusat 13 geleitet, wobei das Diffusat 13 in Feedstrom 14 und Gegenstrom 15 parallele Strömungsrichtungen 16, 17 aufweist. Das Diffusat 13 wird dabei für eine vorgegebene Reinigungszeit parallel durch Feedstrom 14 und Gegenstrom 15 im Kreislauf geführt, was in den Figuren jedoch nicht näher dargestellt wurde.

In Fig. 4 ist ein erfindungsgemäßes Verfahren 500 zur Herstellung regenerierter cellulosischer Formkörper 501 gezeigt. Bei dem Verfahren 500 handelt es sich insbesondere um ein Viskose- oder Modalverfahren zur Herstellung von Viskose- oder Modalfasern 502. In dem Verfahren 500 wird ein Zellstoff 503 in einer Alkalisierungsstufe 510 mit Natronlauge 504 alkalisiert um einen alkalisierten Zellstoff (Alkalizellulose) 505 zu erhalten. In einem weiteren Schritt wird von der Alkalizellulose 505 durch Pressen 520 eine Presslauge 506 von dem alkalisierten Zellstoff 505 abgetrennt. Nachfolgend wird die abgepresste Alkalizellulose 505 in einer Reife- und Lösestufe 540 zu einer Viskose weiterverarbeitet, welche in einer Extrusionsstufe 550 zu den regenerierten cellulosischen Formkörpern 501, insbesondere den Viskosefasern 502, ausgesponnen werden.

Die Presslauge 506 enthält dann Hemicellulosen 22 in einer wässrigen alkalischen Lösung 2, und wird in einer Rückgewinnungsstufe 530 in einem Verfahren 200 in eine Fraktion 507 enthaltend im Wesentlichen Hemicellulosen und in eine Fraktion 508 enthaltend im Wesentlichen Natronlauge aufgetrennt. Die Fraktion 508 ist dabei die rückgewonnene alkalische Lösung 1, welche in dem Verfahren 200 als alkalisch angereichertes Diffusat 13 erzeugt wird. Die Fraktion 507 ist wiederum das in dem Verfahren 200 anfallende, mit Hemicellulosen 22 angereicherte Dialysat 9.

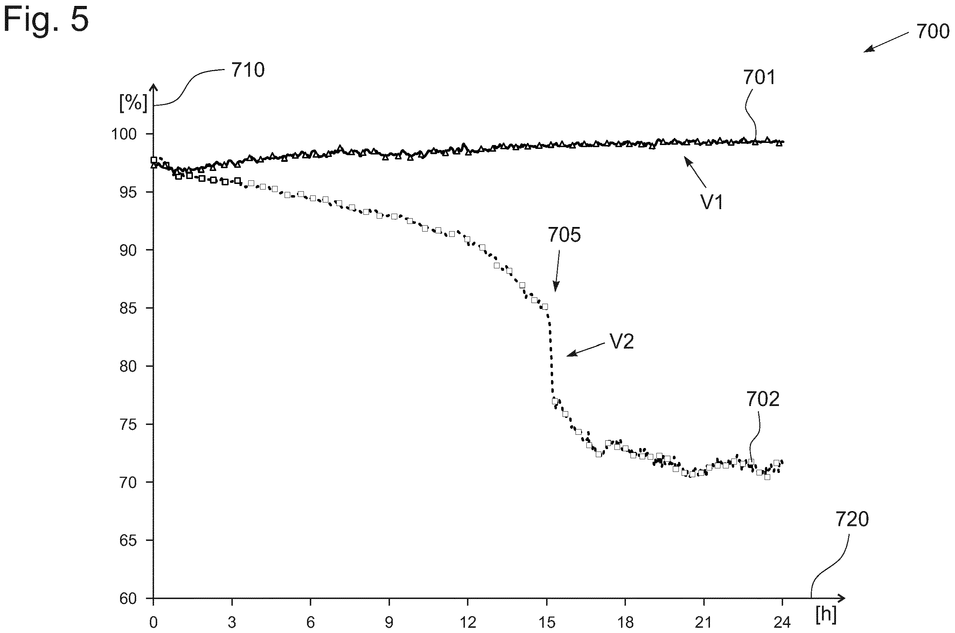

Die Presslauge 506 kann allerdings auch gemäß einem Verfahren 201 oder 202, bzw. nach einem Verfahren gemäß einem der Ansprüche 1 bis 13 in eine Fraktion 507 enthaltend im Wesentlichen Hemicellulosen und in eine Fraktion 508 enthaltend im Wesentlichen Natronlauge aufgetrennt werden, was der Einfachheit halber in Fig. 5 jedoch nur für das Verfahren 200 dargestellt wurde.

Die Fraktion 508 enthaltend im Wesentlichen Natronlauge, welche die rückgewonnene alkalische Lösung 1 enthält, wird dann an die Alkalisierungsstufe 510 zur erneuten Verwendung im Verfahren 500, insbesondere zur weiteren Alkalisierung von Zellstoff 503, rückgeführt.

Die Erfindung betrifft zudem eine Vorrichtung zur Herstellung regenerierter cellulosischer Formkörper 501 aus Zellstoff 503, insbesondere zur Durchführung des Verfahrens 500, welche in den Figuren jedoch nicht näher dargestellt wurde. Die Vorrichtung weist eine Alkalisierungsstufe 510 auf, in welcher Zellstoff 503 mit Natronlauge 504 zu Alkalizellulose 505 alkalisiert und durch Abpressen 520 von der überschüssigen Presslauge 506 befreit wird. Die Vorrichtung weist zudem eine Rückgewinnungsstufe 530 mit einer lonentauscher-Diffusionsdialyse 3, 31 zur Auftrennung der Presslauge 506 in eine Fraktion 507 enthaltend im Wesentlichen Hemicellulosen und in eine Fraktion 508 enthaltend im Wesentlichen Natronlauge, wobei die Presslauge 506 aus der Alkalisierungsstufe 510 an die Rückgewinnungsstufe 530 zugeführt wird und die im Wesentlichen Natronlauge enthaltende Fraktion 508 an die Alkalisierungsstufe 510 rückgeführt wird.

Die Rückgewinnungsstufe 530 zur Auftrennung der Presslauge 506 in eine Fraktion 507 enthaltend im Wesentlichen Hemicellulosen und in eine Fraktion 508 enthaltend im Wesentlichen Natronlauge weist erfindungsgemäß eine Vorrichtung 100, 101 gemäß einem der Ansprüche 9 bis 14 auf, welche eine lonentauscher-Diffusionsdialyse 3, 31 enthält.

### Beispiele

Zur Demonstration der erfindungsgemäßen Vorteile des Verfahrens zur Rückgewinnung von alkalischer Lösung aus mit Hemicellulosen verunreinigter wässriger alkalischer Lösung wurden zwei Vergleichsversuche V1 und V2 durchgeführt.

Die Versuche wurden durchgeführt an einer Anlage mit: FKD Fumatech Kationentauschermembran (unverstärkt, Dicke 0,7-1 mm); Membranstapel mit insgesamt 700 Dialysemembranen; spezifische Anströmung des Feeds von 0,5 l/m²h, spezifische Anströmung des Prozesswassers von 1,0 l/m²h.

Im ersten Versuch V1 wurden entsprechend dem erfindungsgemäßen Verfahren vor dem Zuführen zur lonentauscher-Diffusionsdialyse die Gaskomponenten aus dem Prozesswasser des Gegenstroms entfernt.

Im zweiten Versuch V2 (Vergleichsbeispiel) wurde auf die Entfernung der Gaskomponenten aus dem Prozesswasser des Gegenstroms verzichtet, und das Prozesswasser direkt der lonentauscher-Diffusionsdialyse zugeführt.

In beiden Versuchen V1, V2 wurde die Veränderung der Ausbeute der rückgewonnenen alkalischen Lösung über die Betriebsdauer seit der letzten Reinigung der Dialysemembran gemessen.

Fig. 5 zeigt ein Diagramm 700, welches die Veränderung der Ausbeute 710 in Prozent, bezogen auf die maximale Ausbeute, über der Betriebsdauer 720 in Stunden darstellt. Versuch V1 wird durch die Messpunkte 701 repräsentiert, welche in regelmäßigen Zeitabständen aufgezeichnet wurden. Aus den Messpunkten 701 des Versuchs V1 kann man insbesondere sehen, dass in dem erfindungsgemäßen Verfahren nach Entfernung der Gaskomponenten aus dem Prozesswasser eine sehr konstante und stabile Ausbeute 710 erreicht werden kann. Selbst nach einer Betriebsdauer 720 von 24 h konnte kein Abfall der Ausbeute 710 festgestellt werden. Versuch V2, repräsentiert durch die Messpunkte 702, zeigt dagegen einen von Betriebsbeginn an abfallenden Verlauf der Ausbeute 710. Nach einer Betriebsdauer 720 von 15 h konnte zudem ein starker Abfall 705 der Ausbeute 710 festgestellt werden.

In Tabelle 1 sind Ausbeuten nach unterschiedlichen Betriebsdauern (entsprechend der Werte der Kurven 701 und 702 in Fig. 5) für die Versuche V1 und V2 dargestellt.

**Tabelle 1: Veränderung der Ausbeute in Effektivalkali (EA [%]) mit fortlaufender Betriebsdauer**

| Beispiel | EA [%] / 0 h | EA [%] / 6 h | EA [%] / 12 h | EA [%] / 18 h | EA [%] / 24 h |
|---|---|---|---|---|---|
| V1 | 97,30 | 98,26 | 98,47 | 99,10 | 99,22 |
| V2 | 97,70 | 94,54 | 90,94 | 72,94 | 71,50 |

Entsprechend der Versuche V1 und V2 ist somit gezeigt, dass das erfindungsgemäße Verfahren zum Recycling von wässrigen alkalischen Lösungen entsprechend den Ansprüchen 1 bis 8 einen besonders geringen Wartungsaufwand aufweist, und die Notwendigkeit von Spülungen erheblich reduziert und die Standzeit entsprechend verlängert wird.

## Patentansprüche

1. Verfahren zur Rückgewinnung von alkalischer Lösung (1) aus mit Hemicellulosen (22) verunreinigter wässriger alkalischer Lösung (2), bei dem die wässrige alkalische Lösung (2) als Feedstrom (14) und Prozesswasser (10) als Gegenstrom (15) über eine lonentauscher-Diffusionsdialyse (3, 31) mit zumindest einer Dialysemembran (4, 41, 42, 43, 44, 45) zwischen Feedstrom (14) und Gegenstrom (15) geführt werden und dabei in ein alkalisch angereichertes Diffusat (13) als rückgewonnene alkalische Lösung (1) und ein mit Hemicellulosen (22) angereichertes Dialysat (9) umgesetzt werden, **dadurch gekennzeichnet, dass** vor dem Zuführen zur lonentauscher-Diffusionsdialyse (3, 31) Gaskomponenten (28) aus dem Prozesswasser (10) des Gegenstroms (15) entfernt werden.

2. Verfahren nach Anspruch 1, **dadurch gekennzeichnet, dass** das Prozesswasser (10) vor dem Zuführen zur lonentauscher-Diffusionsdialyse (3, 31) über eine Entgasungseinrichtung (25) geführt wird, worin aus dem Prozesswasser (10) zumindest 90 % der darin enthaltenen Gaskomponenten (28), insbesondere 90% des darin gelösten O₂ und insbesondere 95 % des darin gelösten CO₂, entfernt werden.

3. Verfahren nach Anspruch 1 oder 2, **dadurch gekennzeichnet, dass** das Prozesswasser (10) vor dem Zuführen zur lonentauscher-Diffusionsdialyse (3, 31) einen Gehalt von maximal 1,0 mg/l, insbesondere von maximal 0,7 mg/l, an gelösten Gaskomponenten (28) aufweist.

4. Verfahren nach einem der Ansprüche 1 bis 3, **dadurch gekennzeichnet, dass** die Strömungsgeschwindigkeit des Feedstroms (14) zwischen 0,1 und 1,0 mm/s, insbesondere zwischen 0,2 und 0,5 mm/s, und die Strömungsgeschwindigkeit des Gegenstroms (15) zwischen 0,5 und 2,5 mm/s, insbesondere zwischen 1,0 und 1,5 mm/s, beträgt.

5. Verfahren nach einem der Ansprüche 1 bis 4, bei dem die wässrige alkalische Lösung (2) über eine Nanofiltration (70) geführt wird, worin diese in ein alkalisches Permeat (72) und in ein mit Hemicellulosen angereichertes Retentat (73) aufgetrennt wird, wobei das Permeat (72) ausgeschieden wird und das Retentat (73) als Feedstrom (14) der lonentauscher-Diffusionsdialyse (3, 31) zugeführt wird.

6. Verfahren nach Anspruch 5, bei dem die wässrige alkalische Lösung (2) vor der Nanofiltration (70) über eine Mikrofiltration (80) geführt wird, wobei das Permeat (82) der Mikrofiltration (80) über die Nanofiltration (70) geführt wird.

7. Verfahren nach einem der Ansprüche 1 bis 6, bei dem zur Reinigung der Dialysemembran (4, 41, 42, 43, 44, 45) in regelmäßigen Abständen Diffusat (13) im Parallelstrom über die Dialysemembran (4, 41, 42, 43, 44, 45) geführt wird.

8. Verfahren nach einem der Ansprüche 1 bis 7, **dadurch gekennzeichnet, dass** das Verfahren (200, 201, 202) anhand einer Vorrichtung (100, 101) gemäß einem der Ansprüche 9 bis 14 durchgeführt wird.

9. Vorrichtung zur Rückgewinnung von alkalischer Lösung (1) aus mit Hemicellulosen (22) verunreinigter wässriger alkalischer Lösung (2), aufweisend eine lonentauscher-Diffusionsdialyse (3, 31) mit zumindest einer Dialysemembran (4, 41, 42, 43, 44, 45) und mit zumindest je einem Feedstrom-Flächenkanal (5, 51, 52, 53) welcher eine Zuführung (7) für mit Hemicellulosen (22) verunreinigte wässrige alkalische Lösung (2) als Feedstrom (14) an die Dialysemembran (4, 41, 42, 43, 44, 45), und eine Abführung (8) für Dialysat (9) von der Dialysemembran (4, 41, 42, 43, 44, 45) aufweist, und einem Gegenstrom-Flächenkanal (6, 61, 62, 63), welcher eine Zuführung (11) für Prozesswasser (10) als Gegenstrom (15) an die Dialysemembran (4, 41, 42, 43, 44, 45) und eine Abführung (12) für Diffusat (13) von der Dialysemembran (4, 41, 42, 43, 44, 45) aufweist, wobei der Feedstrom (14) im Feedstrom-Flächenkanal (5, 51, 52, 53) und der Gegenstrom (15) im Gegenstrom-Flächenkanal (6, 61, 62, 63) durch die Dialysemembran (4, 41, 42, 43, 44, 45) getrennt sind und eine entgegengesetzte Strömungsrichtung (16, 17) aufweisen und wobei die Dialysemembran (4, 41, 42, 43, 44, 45) semipermeabel ist, so dass alkalischen Ionen (18) aus der wässrigen alkalischen Lösung (2) über die Dialysemembran (4, 41, 42, 43, 44, 45) ins Diffusat (13) transportiert werden, welches die rückgewonnene alkalische Lösung (1) enthält, **dadurch gekennzeichnet, dass** die Höhe (23, 24) des Feedstrom-Flächenkanals (5, 51, 52, 53) und des Gegenstrom-Flächenkanals (6, 61, 62, 63) jeweils zwischen 250 µm und 1000 µm, insbesondere zwischen 400 µm und 600 µm, betragen, und dass die Vorrichtung (100, 101) eine Entgasungseinrichtung (25), zur Entfernung von Gaskomponenten (28) aus dem Prozesswasser (10), vor der lonentauscher-Diffusionsdialyse (3, 31) aufweist, durch welche das Prozesswasser (10) geführt wird.

10. Vorrichtung nach Anspruch 9, bei dem das Dialysat (9) mit der wässrigen alkalischen Lösung (2) über den Feedstrom-Flächenkanal (5, 51, 52, 53) und das Diffusat (13) mit dem Prozesswasser (10) über den Gegenstrom-Flächenkanal (6, 61, 62, 63) strömungsverbunden sind.

11. Vorrichtung nach Anspruch 9 oder 10, **dadurch gekennzeichnet, dass** die Entgasungseinrichtung (25) eine gasdurchlässige, unter Vakuum (27) stehende Membran (26) aufweist, über welche das Prozesswasser (10) in der Entgasungseinrichtung (25) geführt wird, um die Gaskomponenten (28) aus dem Prozesswasser (10) zu entfernen.

12. Vorrichtung nach einem der Ansprüche 9 bis 11, bei dem die Dialysemembran (4, 41, 42, 43, 44, 45) einen thermoplastischen Kunststoff, insbesondere Polyetheretherketon, aufweist.

13. Vorrichtung nach einem der Ansprüche 9 bis 12, bei dem die lonentauscher-Diffusionsdialyse (31) mehrere Dialysemembranen (41, 42, 43, 44, 45) und mehrere Feedstrom- (51, 52, 53) und Gegenstrom-Flächenkanäle (61, 62, 63) aufweist, wobei zwischen zwei Dialysemembranen (41, 42, 43, 44, 45) jeweils zumindest ein Feedstrom-Flächenkanal (52, 53) oder ein Gegenstrom-Flächenkanal (61, 62) angeordnet ist.

14. Vorrichtung nach Anspruch 13, bei dem die Dialysemembranen (41, 42, 43, 44, 45) in einem Membranstapel (46) parallel zueinander angeordnet sind, wobei jeweils abwechselnd ein Feedstrom-Flächenkanal (52, 53) und ein Gegenstrom-Flächenkanal (61, 62) zwischen zwei Dialysemembranen (41, 42, 43, 44, 45) angeordnet ist.

15. Verfahren zur Herstellung regenerierter cellulosischer Formkörper, insbesondere Viskoseverfahren, bei dem ein Zellstoff (503) in einer Alkalisierungsstufe (510) mit Natronlauge (504) alkalisiert wird um eine Alkalizellulose (505) zu erhalten, durch Pressen (520) eine Presslauge (506) von dem alkalisierten Zellstoff (505) abgetrennt wird, welche Hemicellulosen (22) in einer wässrigen alkalischen Lösung (2) aufweist, und die Presslauge (506) in einem Verfahren (200, 201, 202) nach einem der Ansprüche 1 bis 13 in eine Fraktion (507) enthaltend im Wesentlichen Hemicellulosen (22) und in eine Fraktion (508) enthaltend im Wesentlichen rückgewonnene Natronlauge aufgetrennt wird.

16. Verfahren nach Anspruch 15, bei dem die Fraktion (508) enthaltend im Wesentlichen rückgewonnene Natronlauge an die Alkalisierungsstufe (510) zur erneuten Verwendung im Viskoseverfahren (500), insbesondere zur weiteren Alkalisierung (510) von Zellstoff (503), rückgeführt wird.

17. Vorrichtung zur Herstellung regenerierter cellulosischer Formkörper aus Zellstoff (503), insbesondere nach dem Viskoseverfahren (500), aufweisend eine Alkalisierungsstufe (510) in welcher Zellstoff (503) mit Natronlauge (504) zu Alkalizellulose (505) alkalisiert und durch Abpressen (520) von der überschüssigen Presslauge (506) befreit wird und eine Rückgewinnungsstufe (530) mit einer lonentauscher-Diffusionsdialyse (3, 31) zur Auftrennung der Presslauge (506) in eine Fraktion (507) enthaltend im Wesentlichen Hemicellulosen (22) und in eine Fraktion (508) enthaltend im Wesentlichen rückgewonnene Natronlauge, wobei die Presslauge (506) aus der Alkalisierungsstufe (510) an die Rückgewinnungsstufe (530) zugeführt wird und die im Wesentlichen rückgewonnene Natronlauge enthaltende Fraktion (508) an die Alkalisierungsstufe (510) rückgeführt wird.

18. Vorrichtung nach Anspruch 17, wobei die Rückgewinnungsstufe (530) zur Auftrennung der Presslauge (506) in eine Fraktion (507) enthaltend im Wesentlichen Hemicellulosen (22) und in eine Fraktion (508) enthaltend im Wesentlichen rückgewonnene Natronlauge eine Vorrichtung (100, 101), enthaltend die lonentauscher-Diffusionsdialyse (3, 31), gemäß einem der Ansprüche 9 bis 14 aufweist.
